# EUROPEAN PATENT APPLICATION

(11) **EP 4 734 051 A1**
(43) Date of publication of application: **29.04.2026**
(21) Application number: 25211082.0
(22) Date of filing: 24.10.2025
(51) Int. Cl.: G06T 7/11, G06T 7/174

(54) **SYSTEM AND METHOD OF POINT-CLOUD SEGMENTATION**

(30) Priority: 24.10.2024 US 202463711453 P
(71) Applicant: AGCO International GmbH, 8212 Neuhausen am Rheinfall (CH)
(72) Inventor: CHRISTIANSEN, Martin Peter, 8930 Randers (DK); SLEZAK, Filip, 8930 Randers (DK); BECK, Nicolai, 8930 Randers (DK)
(74) Representative: AGCO Intellectual Property Department

(57) **Abstract**

Methods and systems for converting high dimensional data sets from LiDAR sensors, cameras, and other sensors to more manageable but still useful lower dimensional data sets that can be more easily processed, manipulated, and displayed.

## Description

### BACKGROUND

Grain carts and wagons receive grain harvested by combine harvesters, forage harvesters, and other agricultural machines and transport the grain to bins, trucks, railcars or other grain storage devices. Grain carts and wagons are typically pulled by tractors alongside or behind harvesters and must be aligned with or otherwise positioned relative to the harvesters to ensure the harvested grain or forage materials are properly transferred to the carts or wagons. Cameras and/or LiDAR sensors are often installed on the harvesters to detect the presence and the position of the carts and wagons. These cameras and LiDAR sensors generate large and complex pixel data sets and point-cloud data sets that require relatively powerful processing systems to analyze and high-resolution displays to depict. But powerful processing systems and high-resolution displays are often impractical in many industries, including the agriculture industry. Moreover, in many industries, precise detection, mapping, and displaying of every feature of an object is unnecessary. For example, in the agricultural industry, it's often helpful to know the relative position of a grain-carrying cart to a harvester so that grain can be properly transferred from the harvester to the cart, but it's not necessary to detect the presence and position of every feature of the cart or to display a detailed representation of the cart. Current sensor technologies also have difficulty detecting the presence and position of carts and wagons that are positioned directly behind harvesters as they typically are when a harvester first begins harvesting a field and carts and wagons can't be positioned aside the harvesters due to uncut crops.

### SUMMARY

Embodiments of the present invention provide a distinct advance in the art of cameras, LiDAR sensors, and other sensors used to detect and position grain carts and wagons relative to harvesters. More particularly, embodiments of the invention provide methods and systems for converting high dimensional data sets from cameras, LiDAR sensors, and other sensors mounted on harvesters to more manageable but still useful lower dimensional data sets that can be more easily processed, manipulated, and displayed.

One embodiment of the invention is a computer-implemented method of converting high-dimensional data to lower-dimensional data that includes the steps of receiving, in a processing unit, image data from a camera for an area sensed around a harvester; receiving, in the processing unit, point cloud data from a LiDAR sensor that senses the area; fusing the point cloud data with the image data to create enhanced point cloud data; mapping classifications onto the enhanced point cloud data with an instance network to create mapped enhanced point cloud data; detecting, from the mapped enhanced point cloud data, objects in the area; bounding the detected objects with bounding boxes; and outputting three-dimensional bounding box representations of the objects. Embodiments of the method may further include displaying the three-dimensional bounding box representations of the objects on a display in a harvester or other agricultural vehicle.

Another embodiment of the invention is an imaging system for a harvester or other agricultural vehicle. The imaging system broadly comprises a camera; a LiDAR sensor; and a processing unit. The camera images an area near the harvester and creates image data. The LiDAR sensor senses the same area and creates point cloud data associated with the area. The processing fuses the image data and the point cloud data by augmenting the point cloud data with the image data to create enhanced point cloud data; maps classifications onto the enhanced point cloud data with an instance network to create mapped enhanced point cloud data; detects, from the mapped enhanced point cloud data, objects in the area; bounds the detected objects with bounding boxes; and outputs three-dimensional bounding box representations of the objects. The imaging system may further comprise a display coupled with the processing unit for displaying the three-dimensional bounding box representations of the objects.

These and other embodiments of the invention provide numerous advantages. For example, by converting high dimensional data sets from cameras, LiDAR sensors, and other sensors to more manageable lower dimensional data sets, the data can be more easily processed, manipulated, and displayed. Similarly, by creating three-dimensional bounding box representations of relatively complex objects, the bounding box representations can be analyzed, displayed, or otherwise processed by relatively simple processing devices and displays. In the agricultural industry, embodiments of the invention may be used to convert high dimensional point cloud data sets and image data that represent tractors, carts, crops and other objects to much lower dimensional bounding box representations of the objects that can be more manageably processed, displayed, etc. The invention is particularly helpful for detecting the presence and position of carts and wagons that are positioned directly behind harvesters.

This summary is provided to introduce a selection of concepts in a simplified form that are further described below in the detailed description. This summary is not intended to identify key features or essential features of the claimed subject matter, nor is it intended to be used to limit the scope of the claimed subject matter. Other aspects and advantages of the current invention will be apparent from the following detailed description of the embodiments and the accompanying drawing figures.

### BRIEF DESCRIPTION OF DRAWING FIGURES

Embodiments of the current invention are described in detail below with reference to the attached drawing figures, wherein:
Fig. 1 is block diagram that summarizes data processing steps of embodiments of the present invention.
Fig. 2 is a schematic view of an exemplary harvester and an exemplary grain cart that may be used to implement aspects of the present invention.
Fig. 3 is a block diagram of selected components of an imaging system constructed in accordance with embodiments of the invention.
Fig. 4 is a block diagram of an exemplary controller used in the imaging system of Fig. 3.
Fig. 5 is a flow diagram that illustrates selected steps in computer-implemented methods of the present invention and/or portions of computer programs of the invention.
Fig. 6 is a schematic representation of agricultural equipment that may be scanned and represented by aspects of the present invention.
Fig. 7 shows a three-dimensional bounding box representation of the agricultural equipment shown in Fig. 6.
Fig. 8 is a schematic representation of agricultural equipment that may be scanned and represented by aspects of the present invention.
Fig. 9 shows a three-dimensional bounding box representation of the agricultural equipment shown in Fig. 8.

The drawing figures do not limit the present invention to the specific embodiments disclosed and described herein. The drawings are not necessarily to scale, emphasis instead being placed upon clearly illustrating the principles of the invention.

### DESCRIPTION

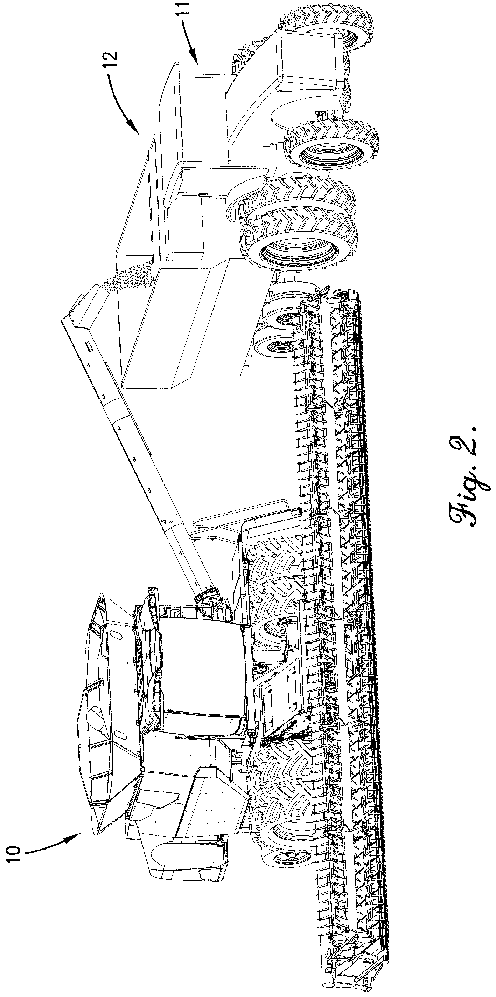

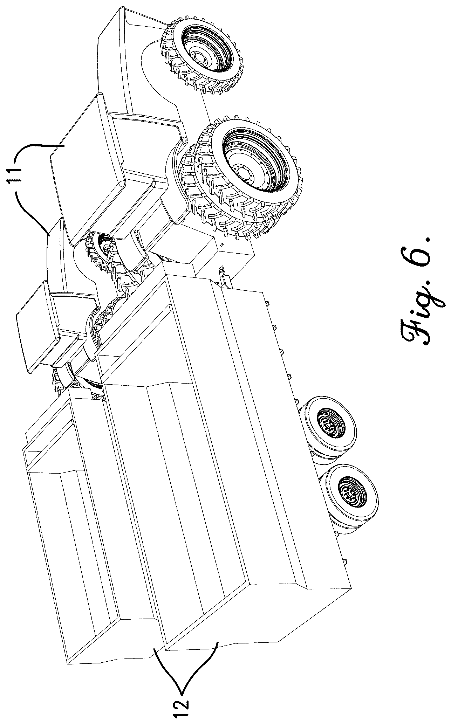

Embodiments of the invention provide methods and systems for converting high dimensional data sets from cameras, LiDAR sensors, and other sensors to more manageable lower dimensional data sets that can be more easily processed, manipulated, and displayed. The methods and systems of the present invention may be used in any industry. In one embodiment, they are installed on harvesters such as the forage harvester 10 shown in Fig. 2 to detect the presence and position of the tractors 11 and carts 12 shown in Figs. 2 and 6.

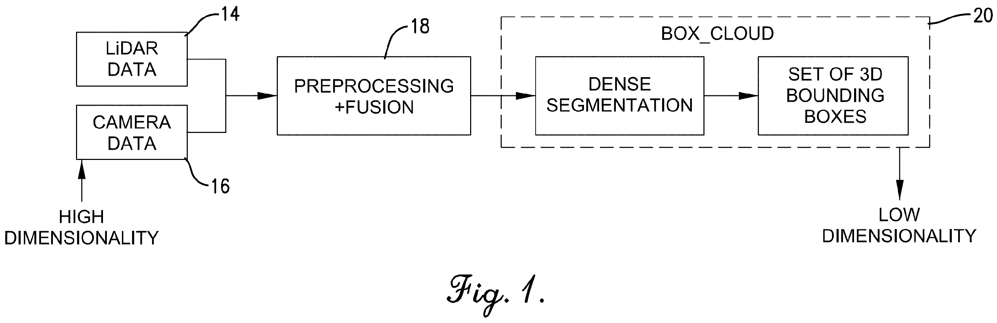

Fig. 1 summarizes the primary steps and components of embodiments of the invention. High dimensional data such as LiDAR data 14 and camera data 16 is obtained from sensors. The LiDAR data is fused with, combined with, or otherwise augmented with the camera data to create enhanced point cloud data as generally depicted in box 18. Classifications are mapped onto the fused data with an instance network to create mapped enhanced point cloud data also as generally depicted in box 18. Then, objects from the sensed area are detected from the mapped enhanced point cloud data as depicted by box 20. The detected objects are then bounded with bounding boxes, and three-dimensional bounding box representations of the objects are output as also depicted in box 20, thus converting the high dimensional data input from the sensors into relatively lower dimensional data that may be more easily analyzed, displayed, or otherwise processed.

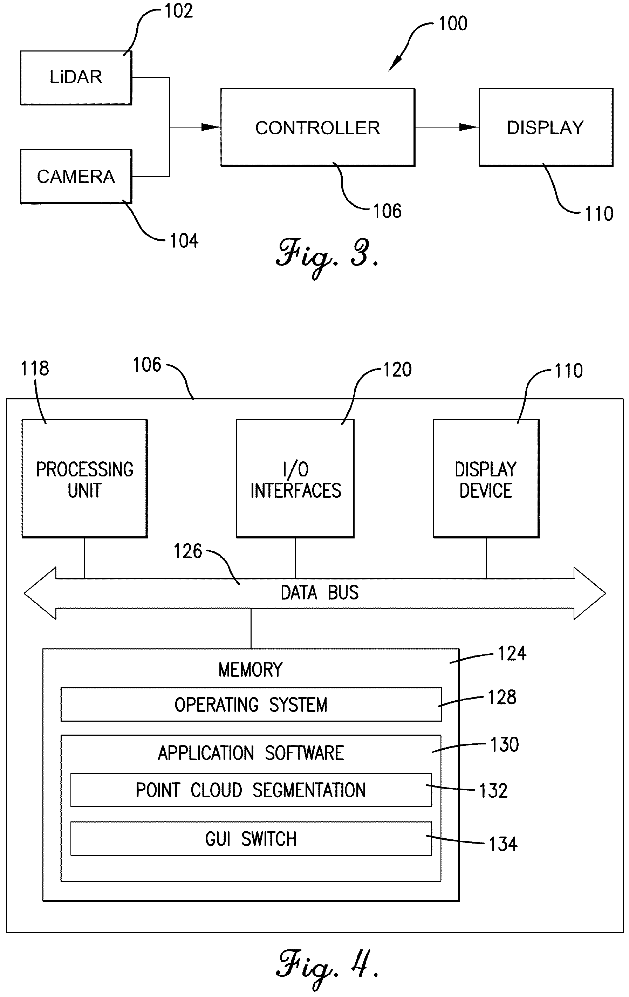

Turning now to Fig. 3, an imaging system 100 constructed in accordance with a specific embodiment of the invention is illustrated. The imaging system may be mounted on or used with the illustrated harvester 10 or other agricultural vehicle for detecting objects near the harvester such as the tractors 11 and carts 12 shown in Figs. 2 and 6. An embodiment of the imaging system 100 broadly comprises a pair of sensors 102, 104, a controller 106, and a display 110.

The sensor 102 may be a radar sensor, a LiDAR sensor, or an ultrasonic sensor. In a particular embodiment, the sensor is a LiDAR sensor configured to be mounted on the harvester 10 for sensing an area near the agricultural vehicle and creating point cloud data associated with the area. The LiDAR sensor generates point cloud data in the form of a coordinate system based on incident angle and distance values relative to the sensor. The mounting angle of the sensor and the pitch of the vehicle on which it is mounted influence how these values translate into a plane coordinate system. More details of these types of sensors and their operation are described in U.S. Patent No. 10,670,708, which is incorporated herein by reference in its entirety.

The other sensor 104 may be a digital camera or other imaging device mounted to the harvester for imaging the same area as the LiDAR sensor and creating image data associated with the area. The camera may employ a charge-coupled device (CCD), an electron-multiplying charge-coupled device (EMCCD), a complementary metal-oxide-semiconductor (CMOS), a back-illuminated CMOS, or any other digital camera sensing technology.

The controller 106, which includes a processing unit 118 shown in Fig. 4, is programmed to receive high dimensional data sets from the LiDAR sensor 102 and the camera 104 and to convert the data to lower dimensional data sets that can be more easily processed, manipulated, and displayed.

In one embodiment, the controller 106 transforms the point cloud data from the LiDAR sensor 102 onto the image data from the camera 104 to create enhanced point cloud data. The camera-LiDAR fusion process involves aligning an combining the rich texture and color information captured by the camera with the accurate 3-D geometry provided by the LiDAR sensor. LiDAR data is first transformed into the camera frame, and then the intersection points are computed to align the two sets of data. This process ensures the 3D geometric information from the LiDAR sensor and the texture and color information from the camera are fused accurately.

The controller 106 may also remove irrelevant parts of the enhanced point cloud data before further processing. For example, in one embodiment, the controller removes data points that are not related to a trailer, wagon, or other target of interest and removes ground layers based on z-filter. Tools such as a Ray Fround filter or Patchwork++ may be used to eliminate ground points.

The controller 106 then processes the enhanced point cloud data with an instance network. The instance network may employ any deep learning or computer vision model or architecture including Mask R-CNN, YOLO, DeepLab, or point-based methods. In one embodiment, the network detects, from the enhanced point cloud data, objects in the area; bounds the detected objects with bounding boxes; and segments the objects by assigning each point or pixel in the enhanced point cloud data a classification related to one of objects. For example, the instance network may identify objects such as tractors, trailers, crop, etc. in the data, delineates each object's boundaries, and maps classification information (tractor, trailer, crops) on each object. In one embodiment, the controller implements a semantic segmentation step to partition the enhanced point cloud data into semantically meaningful regions, where each point or pixel in the data set is assigned a class label corresponding to the object or category it belongs to. Unlike traditional image classification, which assigns a single label to an entire image, semantic segmentation provides a more detailed understanding of the data by identifying and labeling each pixel.

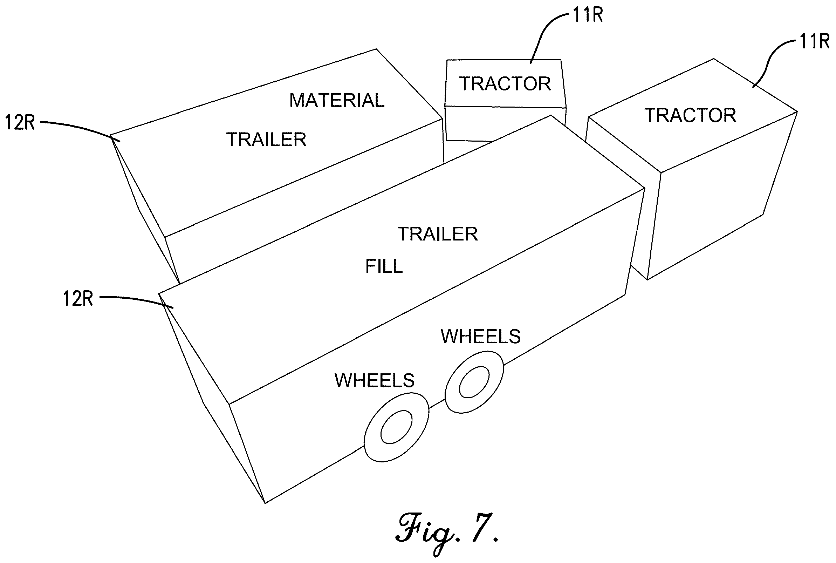

The controller 106 then creates and outputs three-dimensional bounding box representations of the detected objects. Examples of such bounding box representations are depicted in Fig. 7, where the bounding boxes labelled 11R are low data representations of the tractors 11 shown in Fig. 6, the bounding boxes labelled 12R are low data representations of the carts 12 shown in Fig. 6, and the labels "TRACTOR", "TRAILER", "FILL", "MATERIAL", and "WHEELS" are created in the object classification steps described above.

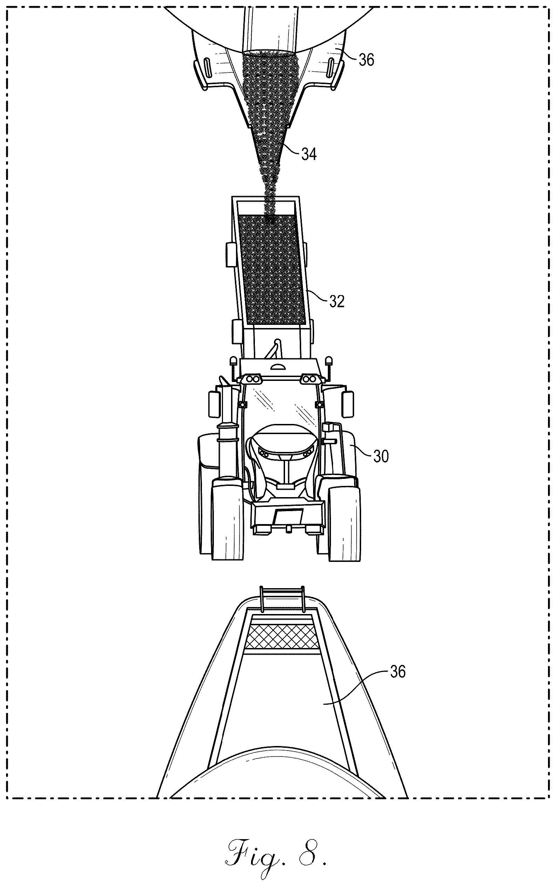

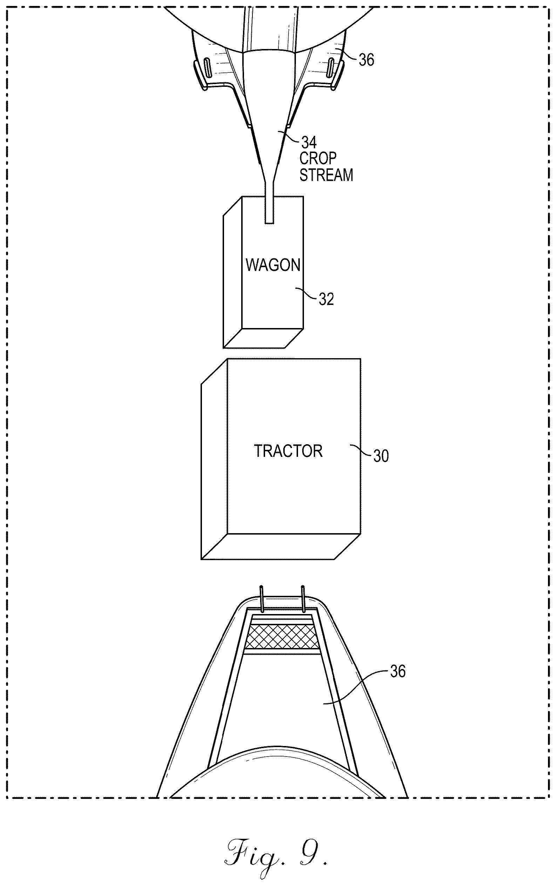

Another example is illustrated in Figures 8 and 9, wherein a tractor 30, trailer 32 and crop stream 34 from a forage harvester 36 to the trailer 32 are captured in an image taken from the forage harvester 36. In this image the tractor 30 and trailer 32 are positioned behind the forage harvester 36 and the crop stream 34 is directed rearward from the forage harvester 36 toward the trailer 32. Using the method described above the controller 106 creates and outputs three-dimensional bounding box representations of the detected objects as illustrated in Fig. 9, wherein the bounding box labelled 30R is a low data representation of the tractor 30, the bounding box labelled 32R is a low data representation of the trailer 32 and the bounding box labelled 34R is a low data representation of the crop stream 34.

The display 110 is coupled with the controller 106 and may display the bounding box representations described above and shown in Fig. 6. The display may incorporate any known display technology including LCD (Liquid Crystal Display, LED (Light Emitting Diode), OLED (Organic Light Emitting Diode), QLED (Quantum Dot LED), etc.

Fig. 4 illustrates an exemplary embodiment of the controller 106 in more detail. The illustrated controller 106 is just one example of a device that may implement aspects of the present invention and may be replaced with another device and/or may have fewer or additional components than those illustrated. Moreover, some of the functionality associated with the various components depicted in Fig. 4 may be combined or distributed among additional modules or devices.

The controller 106 may comprise any processing device or circuitry such as the processing unit 118, which may be a processor or any other logic device, input/output (I/O) interface(s) 120, and memory 124, all coupled to one or more data busses, such as data bus 126. The controller may also have an integrated display, such as the display 110 described above or a different display.

The memory 124 may include any one or a combination of volatile memory elements (e.g., random-access memory RAM, such as DRAM, and SRAM, etc.) and nonvolatile memory elements (e.g., ROM, hard drive, tape, CDROM, etc.). The memory 124 may store a native operating system 128 and one or more native applications, emulation systems, or emulated applications for any of a variety of operating systems and/or emulated hardware platforms, emulated operating systems, etc. In the embodiment depicted in Fig 4, the memory 124 stores or otherwise accesses the operating system 128 and application software 130.

The application software 130 comprises, in one embodiment, point cloud segmentation software 132, graphical user interface (GUI) software 134, and steering software 136. In some embodiments, functionality of one or more of these software modules may be combined into a single software module, or further distributed according to additional modules in the memory 124 or other memory. In some embodiments, functionality for one or more of the software modules may be stored remotely. In some embodiments, a separate storage device (e.g., a non-transitory, computer readable storage medium) may be coupled to the data bus 126 (or the network 108), such as a persistent memory (e.g., optical, magnetic, and/or semiconductor memory and associated drives).

The point cloud segmentation software 132 receives data from the sensors 102, 104 and performs the above-described processing steps. The software may employ the deep learning models discussed above and/or other models and architecture.

The GUI software 134 provides feedback, alerts, and/or recommendations to an operator based on data received from the network 108 and/or from the software modules of the application software 130.

Execution of the software modules is implemented by the processing unit 118 under the management of the operating system 128. In some embodiments, the operating system 128 may be omitted and a more rudimentary manner of control implemented. The processing unit 118 may be embodied as a custom-made or commercially available processor, a central processing unit (CPU) or an auxiliary processor among several processors, a semiconductor based microprocessor (in the form of a microchip), a macroprocessor, one or more application specific integrated circuits (ASICs), a plurality of suitably configured digital logic gates, and/or other well-known electrical configurations comprising discrete elements both individually and in various combinations to coordinate the overall operation of the controller 106.

The I/O interfaces 120 provide one or more interfaces to the network 110, as well as interfaces for access to one or more computer readable mediums, such as memory drives, which includes an optical, magnetic, or semiconductor-based drive. The I/O interfaces 120 may comprise any number of interfaces for the input and output of signals (e.g., analog or digital data) for conveyance over the network 110. The input may comprise input by an operator (local or remote) through a keyboard or mouse or other input device (or audible input in some embodiments), and input from signals carrying information from one or more of the components of the control system 100.

When certain embodiments of the controller 106 are implemented at least in part as software (including firmware), the software can be stored on a variety of non-transitory computer-readable medium for use by, or in connection with, a variety of computer-related systems or methods. In the context of this document, a computer-readable medium may comprise an electronic, magnetic, optical, or other physical device or apparatus that may contain or store a computer program (e.g., executable code or instructions) for use by or in connection with a computer-related system or method. The software may be embedded in a variety of computer-readable mediums for use by, or in connection with, an instruction execution system, apparatus, or device, such as a computer-based system, processor-containing system, or other system that can fetch the instructions from the instruction execution system, apparatus, or device and execute the instructions.

When certain embodiment of the controller 106 are implemented at least in part as hardware, such functionality may be implemented with any or a combination of the following technologies, which are all well-known in the art: a discreet logic circuit(s) having logic gates for implementing logic functions upon data signals, an application specific integrated circuit (ASIC) having appropriate combinational logic gates, a programmable gate array(s) (PGA), a field programmable gate array (FPGA), etc.

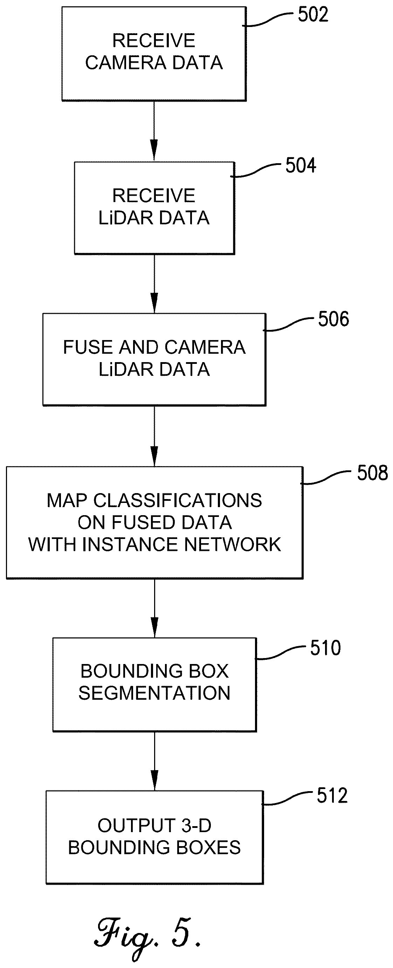

One or more of the process descriptions or blocks in the flow diagram of Fig. 5 should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

Each software module may comprise an ordered listing of executable instructions for implementing logical functions and can be embodied in any computer-readable medium for use by or in connection with an instruction execution system, apparatus, or device, such as a computer-based system, processor-containing system, or other system that can fetch the instructions from the instruction execution system, apparatus, or device, and execute the instructions. In the context of this application, a "computer-readable medium" can be any means that can contain, store, communicate, propagate or transport the program for use by or in connection with the instruction execution system, apparatus, or device including, but not limited to, the memory 124.

Some or all of the components of the system 100 may be enclosed in or supported on a weatherproof housing for protection from moisture, vibration, and impact. The housing may be positioned anywhere on a piece of agricultural equipment and may be constructed from a suitable vibration and impact-resistant material such as, for example, plastic, nylon, aluminum, or any combination thereof and may include one or more appropriate gaskets or seals to make it substantially waterproof or resistant.

The flow chart of Fig. 5 shows the functionality and operation of an exemplary implementation of the present invention. In this regard, some of the blocks of the flow chart may represent method steps and/or a module segment or portion of code of the computer programs of the present invention which comprises one or more executable instructions for implementing the specified logical function or functions. In some alternative implementations, the functions noted in the various blocks may occur out of the order depicted in Fig. 5. For example, two blocks shown in succession in Fig. 5 may in fact be executed substantially concurrently, or the blocks may sometimes be executed in the reverse order depending upon the functionality involved.

As shown in steps 502 and 504, the controller 106 receives data from the camera 104 and the LiDAR sensor 102. In step 506, the controller fuses the point cloud data from the LiDAR sensor 102 with the image data from the camera 104 to create enhanced point cloud data. The controller may also remove irrelevant data and perform the other pre-processing steps described above. In steps 508 and 510, the controller processes the enhanced point cloud data with an instance network to detect, from the enhanced point cloud data, objects in the sensed area. The controller then bounds the detected objects with bounding boxes and segments the objects by assigning each point or pixel in the enhanced point cloud data a classification related to one of objects. In step 512, the controller creates and outputs three-dimensional bounding box representations of the detected objects for display and/or further processing.

### ADDITIONAL CONSIDERATIONS

The detailed description of the technology references the accompanying drawings that illustrate specific embodiments in which the technology can be practiced. The embodiments are intended to describe aspects of the technology in sufficient detail to enable those skilled in the art to practice the technology. Other embodiments can be utilized, and changes can be made without departing from the scope of the current invention. The detailed description is, therefore, not to be taken in a limiting sense. The scope of the current invention is defined only by the appended claims, along with the full scope of equivalents to which such claims are entitled.

Throughout this specification, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments but is not necessarily included. Thus, the current invention can include a variety of combinations and/or integrations of the embodiments described herein.

Although the present application sets forth a detailed description of numerous different embodiments, it should be understood that the legal scope of the description is defined by the words of the claims set forth at the end of this patent and equivalents. The detailed description is to be construed as exemplary only and does not describe every possible embodiment since describing every possible embodiment would be impractical. Numerous alternative embodiments may be implemented, using either current technology or technology developed after the filing date of this patent, which would still fall within the scope of the claims.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of routines, subroutines, applications, or instructions. These may constitute either software (e.g., code embodied on a machine-readable medium or in a transmission signal) or hardware. In hardware, the routines, etc., are tangible units capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as computer hardware that operates to perform certain operations as described herein.

In various embodiments, computer hardware, such as the processing unit 118, may be implemented as special purpose or as general purpose. For example, the processing unit may comprise dedicated circuitry or logic that is permanently configured, such as an application-specific integrated circuit (ASIC), or indefinitely configured, such as an FPGA, to perform certain operations. The processing element may also comprise programmable logic or circuitry (e.g., as encompassed within a general-purpose processor or other programmable processor) that is temporarily configured by software to perform certain operations. It will be appreciated that the decision to implement the processing element as special purpose, in dedicated and permanently configured circuitry, or as general purpose (e.g., configured by software) may be driven by cost and time considerations.

Accordingly, the terms "processing unit", "processing element", or equivalents should be understood to encompass a tangible entity, be that an entity that is physically constructed, permanently configured (e.g., hardwired), or temporarily configured (e.g., programmed) to operate in a certain manner or to perform certain operations described herein. Considering embodiments in which the processing element is temporarily configured (e.g., programmed), each of the processing elements need not be configured or instantiated at any one instance in time. For example, where the processing element comprises a general-purpose processor configured using software, the general-purpose processor may be configured as respective different processing elements at different times. Software may accordingly configure the processing element to constitute a particular hardware configuration at one instance of time and to constitute a different hardware configuration at a different instance of time.

Computer hardware components, such as communication elements, memory elements, processing elements, and the like, may provide information to, and receive information from, other computer hardware components. Accordingly, the described computer hardware components may be regarded as being communicatively coupled. Where multiple of such computer hardware components exist contemporaneously, communications may be achieved through signal transmission (e.g., over appropriate circuits and buses) that connect the computer hardware components. In embodiments in which multiple computer hardware components are configured or instantiated at different times, communications between such computer hardware components may be achieved, for example, through the storage and retrieval of information in memory structures to which the multiple computer hardware components have access. For example, one computer hardware component may perform an operation and store the output of that operation in a memory device to which it is communicatively coupled. A further computer hardware component may then, at a later time, access the memory device to retrieve and process the stored output. Computer hardware components may also initiate communications with input or output devices, and may operate on a resource (e.g., a collection of information).

The various operations of example methods described herein may be performed, at least partially, by one or more processing elements that are temporarily configured (e.g., by software) or permanently configured to perform the relevant operations. Whether temporarily or permanently configured, such processing elements may constitute processing element-implemented modules that operate to perform one or more operations or functions. The modules referred to herein may, in some example embodiments, comprise processing element-implemented modules.

Similarly, the methods or routines described herein may be at least partially processing element implemented. For example, at least some of the operations of a method may be performed by one or more processing elements or processing element-implemented hardware modules. The performance of certain of the operations may be distributed among the one or more processing elements, not only residing within a single machine, but deployed across a number of machines. In some example embodiments, the processing elements may be located in a single location (e.g., within a home environment, an office environment or as a server farm), while in other embodiments the processing elements may be distributed across a number of locations.

Unless specifically stated otherwise, discussions herein using words such as "processing," "computing," "calculating," "determining," "presenting," "displaying," or the like may refer to actions or processes of a machine (e.g., a computer with a processing element and other computer hardware components) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus.

The patent claims at the end of this patent application are not intended to be construed under 35 U.S.C. § 112(f) unless traditional means-plus-function language is expressly recited, such as "means for" or "step for" language being explicitly recited in the claim(s).

Although the technology has been described with reference to the embodiments illustrated in the attached drawing figures, it is noted that equivalents may be employed and substitutions made herein without departing from the scope of the technology as recited in the claims.

Having thus described various embodiments of the technology, what is claimed as new and desired to be protected by Letters Patent includes the following:

## Claims

1. A method of converting high-dimensional data to lower-dimensional data, the method comprising:
receiving, in a processing unit, point cloud data associated with an area sensed by a LiDAR sensor, the area being a portion of an agricultural field;
receiving, in the processing unit, image data from a camera that images the area;
fusing the point cloud data with the image data to create enhanced point cloud data;
mapping classifications onto the enhanced point cloud data with an instance network to create mapped enhanced point cloud data;
detecting, from the mapped enhanced point cloud data, objects in the area, the objects being selected from the group consisting of tractors, trailers, and agricultural materials;
bounding the detected objects with bounding boxes; and
outputting three-dimensional bounding box representations of the objects.

2. The method of claim 1, wherein the mapping step comprises segmenting the enhanced point cloud data by assigning each point in the enhanced point cloud data a classification related to one of objects.

3. The method of claim 1, further comprising transmitting data representative of the three-dimensional bounding box representations of the objects to a remote computer.

4. The method of claim 1, the objects being a receiving vehicle and material stream all positioned behind a harvester; optionally wherein the processing unit, the LiDAR sensor, and the camera are part of a control system mounted on a harvester.

5. The method of claim 1, wherein the processing unit, the LiDAR sensor, and the camera are integrated in a positioning system.

6. A method of converting high-dimensional data to lower-dimensional data, the method comprising:
receiving, in a processing unit, point cloud data associated with an area sensed by a LiDAR sensor;
receiving, in the processing unit, image data from a camera that images the area, the area being a portion of an agricultural field;
fusing the point cloud data with the image data to create enhanced point cloud data;
mapping classifications onto the enhanced point cloud data with an instance network to create mapped enhanced point cloud data, the mapping including segmenting the enhanced point cloud data by assigning each point in the enhanced point cloud data a classification related to one of objects;
detecting, from the mapped enhanced point cloud data, objects in the area, the objects being selected from the group consisting of tractors, trailers, and agricultural materials;
bounding the detected objects with bounding boxes; and
outputting three-dimensional bounding box representations of the objects to a display.

7. The method of claim 1 or claim 6, further comprising outputting classification data with each of the three-dimensional bounding box representations of the objects; and optionally displaying the three-dimensional bounding box representations of the objects along with their classification data.

8. The method of claim 6, the objects being a tractor, receiving trailer and material stream all positioned behind a harvester; optionally wherein the processing unit, the LiDAR sensor, and the camera are part of a control system mounted on a harvester.

9. The method of claim 6, wherein the processing unit, the LiDAR sensor, and the camera are integrated in positioning system.

10. An imaging system for an agricultural vehicle, the imaging system comprising:
a LiDAR sensor for sensing an area near the agricultural vehicle and creating point cloud data associated with the area;
a camera for imaging the area and creating image data associated with the area; and
a processing unit programmed to:
fusing the point cloud data with the image data to create enhanced point cloud data;
map classifications onto the enhanced point cloud data with an instance network to create mapped enhanced point cloud data;
detect, from the mapped enhanced point cloud data, objects in the area;
bound the detected objects with bounding boxes;
output three-dimensional bounding box representations of the objects.

11. The imaging system of claim 10, wherein the processing unit is further programmed to segment the objects by assigning each point in the enhanced point cloud data a classification related to one of objects.

12. The imaging system of claim 10, further comprising a display coupled with the processing unit for displaying the three-dimensional bounding box representations of the objects.

13. The imaging system of claim 10, wherein the area is a portion of an agricultural field and the objects are selected from the group consisting of tractors, trailers, and agricultural materials.

14. The imaging system of claim 13, wherein the processing unit, the LiDAR sensor, and the camera are part of a control system mounted on a harvester.

15. The imaging system of claim 10, wherein the processing unit, the LiDAR sensor, and the camera are integrated in positioning system.
